# EUROPEAN PATENT APPLICATION

(11) **EP 4 503 239 A1**
(43) Date of publication of application: **05.02.2025**
(21) Application number: 23774936.1
(22) Date of filing: 22.03.2023
(51) Int. Cl.: H01M 10/0587, H01M 4/66, H01M 50/533

(54) **NON-AQUEOUS ELECTROLYTE SECONDARY BATTERY**

(30) Priority: 24.03.2022 JP 2022048196
(71) Applicant: Panasonic Intellectual Property Management Co., Ltd., Osaka-shi, Osaka 540-6207 (JP)
(72) Inventor: TAKAHASHI,Takahiro, Kadoma-shi, Osaka 571-0057 (JP)
(74) Representative: Novagraaf International SA
(86) International application number: PCT/JP2023/011177
(87) International publication number: WO 2023/182341

(57) **Abstract**

A nonaqueous electrolyte secondary battery including: an electrode group including a first electrode having a first current collector, a second electrode having a second current collector, and a separator interposed between the first electrode and the second electrode; a nonaqueous electrolyte; and a battery case housing the electrode group and the nonaqueous electrolyte. The first electrode and the second electrode are wound with the separator interposed therebetween, in which an outermost layer of the first electrode is disposed further outside than an outermost layer of the second electrode. The winding-finish end of the first electrode is an end of an excess portion which is wound around an outer surface of the first electrode on the inner layer side, with neither the second electrode nor the separator interposed therebetween, and the excess portion is an exposed portion of the first current collector.

## Description

### [Technical Field]

The present disclosure relates to a nonaqueous electrolyte secondary battery.

### [Background Art]

Patent Literature 1 proposes a nonaqueous electrolyte secondary battery including: a wound electrode body formed by spirally winding belt-like electrodes each including a belt-like current collector and mixture layers formed on both sides of the current collector, with a separator interposed between the electrodes; and a battery can housing the wound electrode body, in which the electrodes are each provided with a current collector-exposed portion where the mixture layer is not formed on either side of the current collector in an end portion thereof on the outer layer side in the winding direction, in the range of one or more layers from the end portion.

Patent Literature 1 discloses that "in conventional nonaqueous electrolyte secondary batteries, in which the mixture layer is formed close to the end portion of the current collector on the outer layer side in the winding direction, there has been a problem such that, for example, in the event of abnormality, such as crushing of the battery can, when an end portion of the negative electrode on the outer layer side pierces through the separator, the tip of the end portion comes in contact with the mixture layer of the adjacent positive electrode, and as a result, the negative electrode and the positive electrode are electrically connected to each other, causing an internal short circuit (shorting)." Patent Literature 1 aims to "provide a nonaqueous electrolyte secondary battery in which a current collector-exposed portion where the mixture layer is not formed is disposed at an end portion of an electrode in the winding direction, over the range of one or more layers from the end portion, so that the electrodes of the same polarity can come in contact with each other even when the electrode pierces through the separator and contacts the adjacent electrode, thereby to prevent or effectively suppress the occurrence of an internal short circuit."

### [Citation List]

### [Patent Literature]

Patent Literature 1: Japanese Laid-Open Patent Publication No. 2003-297432

### [Summary of Invention]

### [Technical Problem]

Simply suppressing an internal short circuit caused by crushing of individual batteries, however, is insufficient in some cases to enhance the safety. For example, when a plurality of batteries are used in combination (e.g., in the case of a module including a plurality of batteries), it is important to prevent a fire spread among the batteries. The fire spread can occur, when an abnormality occurs in one or more of the plurality of batteries and those battery reach a high temperature. When the internal pressure of the battery that has reached a high temperature reaches a predetermined value, the gas in the battery is vented outside through a predetermined safety valve, and the safety is ensured. However, the batteries around the battery in which an abnormality has occurred are heated from outside, and a large amount of heat is transmitted to the battery cases, to reduce the strength of the battery cases. In that case, cracks can occur in side walls of the battery cases before the safety valve is activated. Since the high-temperature gas can be vented outside through the cracks in unintended directions, there is a risk of ending up in a fire spread.

### [Solution to Problem]

One aspect of the present disclosure relates to a nonaqueous electrolyte secondary battery, including: an electrode group including a first electrode having a first current collector, a second electrode having a second current collector, and a separator interposed between the first electrode and the second electrode; a nonaqueous electrolyte; and a battery case housing the electrode group and the nonaqueous electrolyte, wherein the first electrode and the second electrode are wound with the separator interposed therebetween, in which an outermost layer of the first electrode is disposed further outside than an outermost layer of the second electrode, a winding-finish end of the first electrode is an end of an excess portion which is wound around an outer surface of the first electrode on an inner layer side, with neither the second electrode nor the separator interposed therebetween, and the excess portion is an exposed portion of the first current collector.

### [Advantageous Effects of Invention]

According to the present disclosure, the safety is improved when a plurality of batteries are used in combination.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A longitudinal cross-sectional view of a nonaqueous electrolyte secondary battery according to one embodiment of the present disclosure.
[FIG. 2] A conceptual diagram of the cross-sectional structure of a nonaqueous electrolyte secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. For the components other than those characteristic of the present disclosure, any known components for secondary batteries may be adopted. In the present specification, when referring to "a range of a numerical value A to a numerical value B," the range includes the numerical value A and the numerical value B. When a plurality of materials are mentioned as examples, one kind of them may be selected and used singly, or two or more kinds of them may be used in combination.

A nonaqueous electrolyte secondary battery according to an embodiment of the present invention includes an electrode group, a nonaqueous electrolyte, and a battery case. The battery case houses the electrode group and the nonaqueous electrolyte. The nonaqueous electrolyte secondary battery is a secondary battery that includes a liquid, gel, or solid nonaqueous electrolyte, and encompasses lithium-ion secondary batteries, lithium secondary batteries (lithium-metal secondary batteries), and all-solid-state secondary batteries.

The electrode group includes a first electrode having a first current collector, a second electrode having a second current collector, and a separator interposed between the first electrode and the second electrode, in which the first electrode and the second electrode are wound with the separator interposed therebetween. That is, the electrode group is of a wound type, and is, for example, columnar in shape.

The shape of the battery case may be any shape that can efficiently house the wound-type electrode group, for example, may have a cylindrical tubular portion, and may be shaped like a track (a shape in which a rectangular cross section having short and long sides is modified to have outwardly convex arc-shaped short sides). The material constituting the battery case is not particularly limited, but when containing a highly thermally conductive metal, the effect of the present invention is remarkable. The battery case may be a metal case or a metal can (outer jacket can). The material of the battery case may be stainless steel (SUS), steel (SPCC, SPCE, etc.), and the like.

The first electrode may include at least a first current collector, and may include a first active material layer disposed on a surface of the first current collector. The first active material layer contains an electrode active material. Likewise, the second electrode may include at least a second current collector, and may include a second active material layer disposed on a surface of the second current collector. The second active material layer contains an electrode active material. Usually, at least one of the first electrode and the second electrode has an active material layer. The electrode active material exhibits capacity through the Faraday reaction. Each active material layer may be a mixture layer containing an electrode active material and components other than the active material (binder etc.).

One of the first electrode and the second electrode is a negative electrode, and the other is a positive electrode. The negative electrode may have a negative electrode current collector, and may have a negative electrode active material layer (or a negative electrode mixture layer) disposed on a surface of the negative electrode current collector. The positive electrode has a positive electrode current collector, and a positive electrode active material layer (or a positive electrode mixture layer) disposed on a surface of the positive electrode current collector.

When the first electrode is a negative electrode, the first current collector is a negative electrode current collector. When the first electrode is a positive electrode, the first current collector is a positive electrode current collector. Each current collector is in the form of a sheet, and for example, is a metal foil. Each current collector has, for example, a long or belt-like shape.

When the first electrode is a negative electrode, the first current collector desirably contains Cu. Copper is excellent in thermal conductivity, and even when the battery is heated from outside, the battery case is unlikely to locally reach a high temperature. Therefore, the strength of the battery case is maintained, leading to less occurrence of cracking. The first current collector containing Cu may be copper foil, copper alloy foil, and the like. The thickness of the first current collector containing Cu may be, for example, 4 µm to 12 µm.

When the first electrode is a positive electrode, the first current collector desirably contains at least one selected from the group consisting of Al, Ti, and stainless steel. Such a first current collector may be aluminum foil, aluminum alloy foil, titanium foil, titanium alloy foil, stainless steel foil, and the like. In that case, the thickness of the first current collector may be, for example, 10 µm to 20 µm.

When the first electrode is a negative electrode, the first active material layer is a negative electrode active material layer. When the first electrode is a positive electrode, the first active material layer is a positive electrode active material layer. The negative electrode active material layer and the positive electrode active material layer are disposed on a predetermined surface of one or both sides of the current collector. Note that the negative electrode may not have a negative electrode active material layer. The positive electrode active material layer faces the negative electrode, with a separator interposed therebetween.

In the electrode group, the outermost layer of the first electrode is disposed further outside than the outermost layer of the second electrode. That is, the first electrode is an electrode that constitutes the outermost layer of the electrode group. The outer surface of the outermost layer of the first electrode may be in contact with the battery case.

The winding-finish end of the first electrode is an end of an excess portion which is wound around the outer surface of the first electrode on the inner layer side (inner by one layer), with neither the second electrode nor the separator interposed therebetween. That is, the first electrode is provided on its winding-finish side with an excess portion where neither the outer surface or the inner surface thereof faces the second electrode. On the outer surface of the first electrode around which the excess portion is wound, the first active material layer may be disposed, but may not be disposed. That is, at least part of or all of the outer surface of the first electrode around which the excess portion is wound may be an exposed portion of the first current collector.

The excess portion has a function of suppressing cracking in the battery case when the battery is heated from outside. When the battery is abnormally heated from outside, the battery case becomes hot, and the strength of the battery case decreases. Without the excess portion, when the pressure inside the battery increases, cracking would occur in the side wall of the battery case before the safety valve is activated. The excess portion has a heat diffusion effect that suppresses local heating of the battery case and also serves as a physical barrier that prevents the occurrence of cracking.

As a result, when a plurality of batteries are used in combination (e.g., when a module in which a plurality of batteries are housed closely each other), the excess portion has a function of suppressing the fire spread among the batteries. In a battery having an excess portion, the occurrence of cracking in the battery case is suppressed, and the gas is likely to be vented through a safety valve provided in the battery.

In view of enhancing the function of suppressing cracking in the battery case by the excess portion, the melting point of the first current collector is desirably 600 °C or higher, more desirably a temperature (e.g., 1000 °C or higher) at which it will not melt due to high-temperature gas generated in the event of an abnormality. In this case, the first current collector acts as a barrier to suppress cracking in the battery case, so that the ventilation of gas in unintended directions that may be caused due to the occurrence of cracking can be suppressed.

The excess portion is wound around the outer surface of the first electrode on the inner layer side, with neither the second electrode nor the separator interposed therebetween. In this case, the excess portion directly contacts the outer surface of the first electrode on the inner layer side. For example, 50% or more or 80% or more (e.g., 90% or more) of the excess portion may be wound around the outer surface of the first electrode on the inner layer side, with neither the second electrode nor the separator interposed therebetween. That is, 50% or more or 80% or more (e.g., 90% or more) of the excess portion may be brought into direct contact with the outer surface of the first electrode on the inner layer side. When the first active material layer is not disposed on the outer surface of the first electrode around which the excess portion is wound, the excess portion will directly contact the exposed portion of the outer surface of the first current collector.

On the other hand, when the excess portion is wound, with a separator interposed therebetween, around the outer surface of the first electrode on the inner layer side, it may be impossible to sufficiently obtain the effect of controlling the occurrence of cracking in the battery case. This is because the separator itself is at least partially made of a flammable material. When the separator gets burned between the first electrode on the inner layer side and the excess portion, it becomes impossible to sufficiently obtain the heat diffusion effect of the excess portion. In addition, bucking of the outermost layer of the electrode group tends to occur due to a deformation of the separator, a generation of cinders, and the like, which facilitates the occurrence of an internal short circuit. Therefore, it is desirable that 95% or more of the excess portion is wound around the outer surface of the first electrode on the inner layer side, with neither the second electrode nor the separator interposed therebetween.

Although a decent effect can be obtained when the excess portion is short, a circumferential length L1 of the excess portion is desirably 50% or more of a circumferential length L of the first electrode of the outermost layer, more desirably 75% or more, even more desirably 100% or more. The longer the length L1 is, the greater the effect of improving the safety is. However, in view of maintaining the volume energy density of the battery high, the length L1 is desirably 500% or less of the L, more desirably 400% or less. Note that when the length L1 is 100% of the length L, that is, when L1 = L, one layer of the first electrode of the outermost layer exactly matches the length of the excess portion.

The winding-start end of the electrode group may be constituted of only the negative electrode, or only the negative electrode and the separator. For example, one or more layers from the winding-start end of the electrode group may be constituted of only the negative electrode, or only the negative electrode and the separator. Hereinafter, the portion corresponding to "one layer from the winding-start end of the electrode group" is sometimes referred to as an "electrode group center portion." The electrode group center portion may be constituted of a negative electrode current collector, and a negative electrode part having a negative electrode active material layer on one or both sides of the negative electrode current collector, may be constituted of a laminate of such a negative electrode part and a separator, may be constituted of only a negative electrode current collector, and may be constituted of a laminate of a negative electrode current collector and a separator. The negative electrode or the negative electrode current collector, as compared to the positive electrode, is unlikely to be a starting point of thermal runaway. By constituting the electrode group center portion of something other than the positive electrode, that is, the negative electrode (or negative electrode current collector) and a separator, a robust tubular portion can be provide at the electrode group center portion. A hollow is formed inside the tubular portion. Such a tubular portion can maintain its shape even at high temperatures. Therefore, in the event of an abnormality, the hollow in the electrode group center portion acts as a passage for the gas generated inside the battery, so that the gas is vented outside through the safety valve. As a result, the fire spread among the batteries can be more effectively suppressed.

The diameter of the hollow inside the tubular portion formed by the electrode group center portion is desirably as large as possible in view of enhancing the function as a passage for high-temperature gas, and may be desirably, for example, 1 mm or more, and may be 2 mm or more or 3 mm or more. However, when the diameter of the hollow is too large, the volume energy density of the battery decreases. Therefore, the diameter of the hollow is desirably, for example, 8 mm or less, and more desirably 6 mm or less. The diameter of the hollow is measured in a state where a portion corresponding to one layer from the winding-start end of the electrode group, that is, the electrode group center portion, is pressed outward (toward the inner wall of the hollow in the electrode group). The diameter of an equivalent circle in a cross section perpendicular to the winding axis direction of the space formed at that time inside the hollow may be regarded as a diameter of the hollow.

In the following, an embodiment of the nonaqueous electrolyte secondary battery according to the present disclosure will be further described with reference to the drawings. In each drawing, the shape or characteristics of each component do not necessarily reflect the actual dimensions, and are not necessarily drawn at the same scale. The same components are designated by the same reference numerals throughout the drawings.

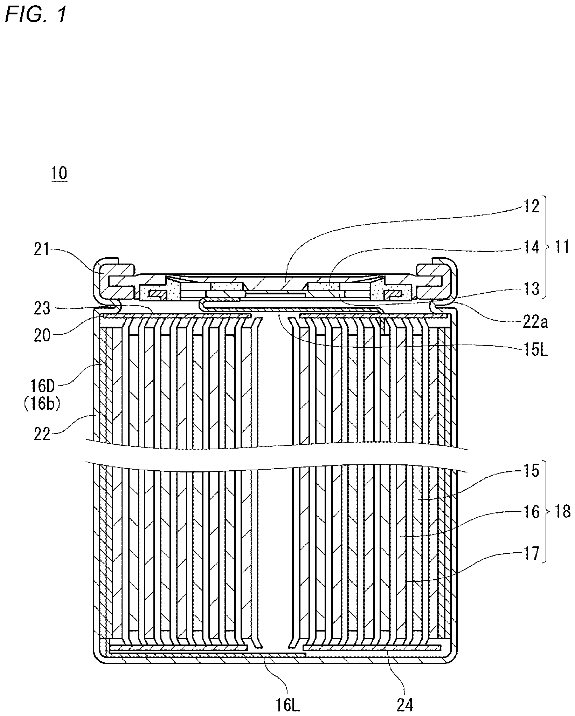

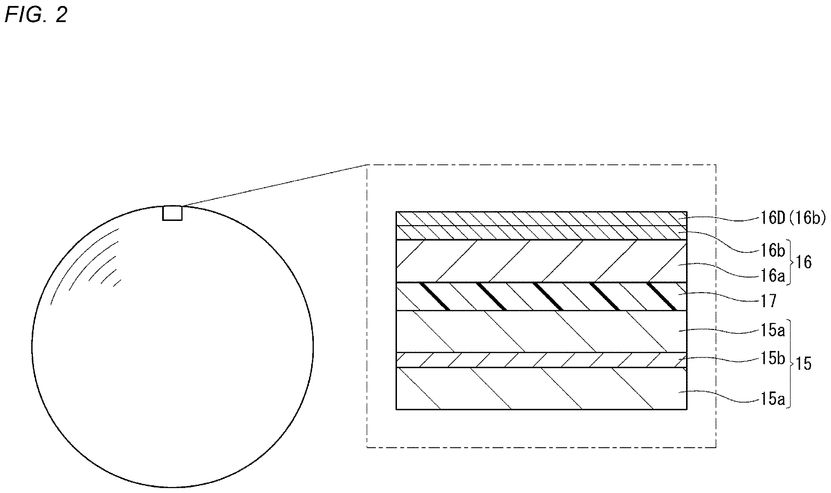

FIG. 1 is a longitudinal cross-sectional view of a cylindrical nonaqueous electrolyte secondary battery 10 (hereinafter, sometimes simply referred to as a "battery 10") according to a first embodiment of the present disclosure. FIG. 2 is a conceptual diagram of the cross-sectional structure of the battery 10. The present disclosure, however, is not limited to the following configuration.

In FIG. 1, the battery 10 includes an electrode group 18, a nonaqueous electrolyte (not shown), and a bottomed cylindrical battery case (metal can) 22 housing them. A sealing assembly 11 is fixed by crimping onto the opening of the battery case 22, with a gasket 21 interposed therebetween. This seals the inside of the battery 10. The sealing assembly 11 includes a safety valve of an internal pressure activation type, which shuts off the current in the event of excessive rise in the battery internal pressure, and breaks open if necessary. That is, the sealing assembly includes a valve body 12 having a thin-walled portion, a metal plate 13, and an annular insulating member 14 interposed between the valve body 12 and the metal plate 13. The valve body 12 and the metal plate 13 are connected to each other at their respective centers. A positive electrode lead 15L led out from a positive electrode 15 is connected to the metal plate 13. Thus, the valve body 12 functions as an external terminal of the positive electrode 15, and also functions as the safety valve. When the battery internal pressure rises, the connection between the valve body 12 and the metal plate 13 is broken, to shut off the current, and as a next step, when the thin-walled portion is broken, the gas is released outside, to ensure the safety. A negative electrode lead 16L led out from a negative electrode 16 is connected to the bottom inner surface of the battery case 22. An annular groove 22a is formed in the vicinity of the open end of the battery case 22. A first insulating plate 23 is disposed between one end face of the electrode group 18 and the annular groove 22a. A second insulating plate 24 is disposed between the other end face of the electrode group 18 and the bottom of the battery case 22. The electrode group 18 is formed by winding the positive electrode 15 and the negative electrode 16 with a separator 17 interposed therebetween, into a columnar shape. The outermost layer of the electrode group 18 is constituted of the negative electrode 16 on the winding-finish side. In other words, in the electrode group 18, the outermost layer of the negative electrode 16 is disposed further outside than the outermost layer of the positive electrode 15.

FIG. 2 is a cross-sectional view of a part (outermost layer part (S)) of the electrode group 18 nearest to the side wall of the metal case. In the outermost layer of the electrode group 18, the negative electrode current collector 16b on the winding-finish side is disposed. The outer surface of the outermost layer of the negative electrode 16 may be in contact with the inner side wall of the battery case 22.

The winding-finish end of the negative electrode 16 can also be the end of an excess portion 16D which is wound around the outer surface of the negative electrode 16 on the inner layer side, without the positive electrode 15 interposed therebetween. In FIG. 2, the excess portion 16D is directly wound around the outer surface of the negative electrode 16 (negative electrode current collector 16b) on the inner layer side, with neither the positive electrode 15 nor the separator 17 interposed therebetween.

In the negative electrode 16 on the one-layer inner side adjacent to the excess portion 16D, a negative electrode active material layer 16a is disposed on its inner surface, and on its outer surface, the negative electrode current collector 16b is exposed. This is because the negative electrode active material layer 16a disposed in a part facing the excess portion 16D, if any, does not contribute to the capacity. In the negative electrode current collector 16b on the further inner layer side (inner by two or more layers from the excess portion 16D), the negative electrode active material layers 16a are disposed on its both surfaces. Note that, in the negative electrode 16 on the one-layer inner side from the outermost layer (excess portion 16D), the negative electrode active material layer 16a may be disposed on its outer surface. In the outermost layer of the positive electrode 15, a positive electrode active material layer 15a is disposed on the inner and outer surfaces of a positive electrode current collector 15b.

According to the laminated structure as illustrated in FIG. 2, when the battery 10 is heated from outside, the excess portion 16D exerts a thermal diffusion effect and serves as a physical barrier to protect the battery case 22. This diminishes the influence of heat, and suppresses the temperature rise in the outermost layer part (S) of the electrode group 18. In addition, cracking in the battery case 22 due to a decrease in strength of the battery case 22 becomes less likely to occur. In other words, even when a plurality of batteries are used in combination, the fire spread among the batteries becomes less likely to occur. Without the excess portion 16D, the outermost layer part (S) will be a part which is most likely to be a starting point of thermal runaway when the battery is heated from outside. Accordingly, suppressing the temperature rise in the outermost layer part (S) and protecting the battery case 22 are important measures to prevent the fire spread.

A detailed description will be given below of each component of a lithium-ion secondary battery as an example of a nonaqueous electrolyte secondary battery.

### <Negative electrode>

The negative electrode includes at least a negative electrode current collector, and includes, for example, a negative electrode current collector, and a negative electrode active material layer (negative electrode mixture layer) formed on a surface of the negative electrode current collector and containing a negative electrode active material. The negative electrode mixture layer can be formed by applying a negative electrode slurry of a negative electrode mixture dispersed in a dispersion medium onto a surface of the negative electrode current collector, followed by drying. The dry applied film may be rolled as necessary. The negative electrode mixture layer may be formed on one side or both sides of the negative electrode current collector.

The negative electrode mixture contains a negative electrode active material as an essential component, and may contain a binder, a conductive agent, a thickener, and the like as optional components. The negative electrode active material includes a material that electrochemically absorbs and releases lithium ions. As the material that electrochemically absorbs and releases lithium ions, a carbon material, a Si-containing material, and the like can be used. Examples of the Si-containing material include silicon oxide (SiOₓ where 0.5 ≤ x ≤ 1.5), and a composite material containing a silicate phase and silicon particles dispersed in the silicate phase.

Examples of the carbon material include graphite, graphitizable carbon (soft carbon), and non-graphitizable carbon (hard carbon). In particular, graphite is preferred in terms of its excellent stability during charging and discharging and small irreversible capacity. Graphite means a material having a graphite-like crystal structure, examples of which include natural graphite, artificial graphite, and graphitized mesophase carbon particles. The carbon material may be used singly or in combination of two or more kinds.

When, among the negative electrode active materials, a composite material containing a silicate phase and silicon particles dispersed in the silicate phase is used, high capacity is easily achieved because the content of the silicon particles can be selected as desired. Here, the silicate phase means a composite oxide phase containing silicon, oxygen, an alkali metal, and the like. A composite material in which the silicate phase is a lithium silicate phase containing silicon, oxygen, and lithium is sometimes referred to as an "LSX." The higher the content of silicon particles in the LSX, the larger the negative electrode capacity is. The LSX absorbs lithium ions through alloying of silicon with lithium. By increasing the content of the silicon particles, high capacity can be expected.

The crystallite size of the silicon particles dispersed in the lithium silicate phase is, for example, 5 nm or more. The silicon particles have a particulate phase of elementary silicon (Si). When the crystallite size of the silicon particles is set to 5 nm or more, the surface area of the silicon particles can be suppressed small, and therefore, the deterioration of the silicon particles accompanied by the generation of irreversible capacity is unlikely to occur. The crystallite size of the silicon particles is calculated from the half-value width of a diffraction peak attributed to the Si (111) plane of an X-ray diffraction (XRD) pattern of the silicon particle using the Scherrer's equation.

As the negative electrode active material, the LSX and a carbon material may be used in combination. The LSX expands and contracts in volume associated with charging and discharging, and therefore, increasing the proportion thereof in the negative electrode active material can lead to higher occurrence of a contact failure between the negative electrode active material and the negative electrode current collector during charging and discharging. However, by using the LSX in combination with a carbon material, it becomes possible to achieve excellent cycle characteristics while imparting a high capacity of the silicon particles to the negative electrode. The proportion of the LSX in the sum of the LSX and the carbon material is preferably, for example, 3 to 30 mass%. This makes it easier to achieve both high capacity and improved cycle characteristics.

As the negative electrode current collector, a metal foil, a mesh, a net, a punched sheet, and the like can be used. Examples of the material of the negative electrode current collector includes stainless steel, nickel, nickel alloy, copper, and copper alloy.

As the binder for the negative electrode, for example, a resin material is used. Examples of the binder include a fluorocarbon resin, a polyolefin resin, a polyamide resin, a polyimide resin, an acrylic resin, a vinyl resin, and a rubbery material (e.g., styrene butadiene copolymer (SBR)). The binder may be used singly or in combination of two or more kinds.

The thickener may be, for example, a cellulose derivative, such as cellulose ether. Examples of the cellulose derivative include carboxymethyl cellulose (CMC) and modified products thereof, and methyl cellulose. The thickener may be used singly or in combination of two or more kinds.

Examples of the conductive material include carbon nanotubes (CNTs), carbon fibers other than CNTs, and conductive particles (e.g., carbon black, graphite).

The dispersion medium used in the negative electrode slurry is not particularly limited, and may be, for example, water, an alcohol, N-methyl-2-pyrrolidone (NMP), mixed solvents thereof, and the like.

As the negative electrode current collector, for example, a metal foil can be used. The negative electrode current collector may be porous. Examples of the material of the negative electrode current collector include stainless steel, nickel, nickel alloy, copper, and copper alloy. The thickness of the negative electrode current collector is, although not limited to, for example, 1 to 50 µm, and may be 5 to 30 µm.

### <Positive electrode>

The positive electrode includes, for example, a positive electrode current collector, and a positive electrode active material layer (positive electrode mixture layer) formed on a surface of the positive electrode current collector and containing a positive electrode active material. The positive electrode mixture layer can be formed by applying a positive electrode slurry of a positive electrode mixture dispersed in a dispersion medium onto a surface of the positive electrode current collector, followed by drying. The dry applied film may be rolled as necessary. The positive electrode mixture layer may be formed on one side or both sides of the positive electrode current collector. The positive electrode mixture contains a positive electrode active material as an essential component, and may contain a binder, a thickener, and the like as optional components.

The positive electrode active material may be any material that can be used as a positive electrode active material for nonaqueous electrolyte secondary batteries (esp. lithium-ion secondary batteries), and in view of achieving high capacity, includes a lithium-transition metal composite oxide containing at least nickel as a transition metal (composite oxide N). The proportion of the composite oxide N in the positive electrode active material is, for example, 70 mass% or more, may be 90 mass% or more, and may be 95 mass% or more.

The composite oxide N may be, for example, a lithium-transition metal composite oxide having a layered rock-salt type structure and containing Ni and at least one selected from the group consisting of Co, Mn, and Al. Hereinafter, a lithium-transition metal composite oxide having a layered rock-salt type structure and containing Ni and at least one selected from the group consisting of Co, Mn, and Al, in which the proportion of Ni in the metal elements other than Li is 80 atom% or more is sometimes referred to as a "composite oxide HN." The proportion of the composite oxide HN in the composite oxide N used as the positive electrode active material is, for example, 90 mass% or more, may be 95 mass% or more, and may be 100%. The higher the proportion of Ni is, the more the lithium ions can be extracted from the composite oxide HN during charging, leading to high capacity. Co, Mn, and Al contribute to stabilizing the crystal structure of the composite oxide HN, which has a high Ni content.

The composite oxide HN is represented by, for example, a formula: Li_{α}Ni_{(1-x1-x2-y-z)}Coₓ₁Mnₓ₂Al_{y}M_{z}O_{2+β}. The element M is an element other than Li, Ni, Co, Mn, Al, and oxygen. Mn contributes to stabilizing the crystal structure of the composite oxide HN, and Mn is inexpensive, the inclusion of which in the composite oxide HN is advantageous for cost reduction. Al contributes to stabilizing the crystal structure of the composite oxide HN.

In the above formula, α representing the atomic ratio of lithium satisfies, for example, 0.95 ≤ α ≤ 1.05. The value of α increases and decreases during charging and discharging. In (2+β) representing the atomic ratio of oxygen, β satisfies -0.05 ≤ β ≤ 0.05.

The value of 1-x1-x2-y-z (= v) representing the atomic ratio of Ni is, for example, 0.8 or more, may be 0.85 or more, and may be 0.90 or more, or 0.95 or more. The value of v may be 0.98 or less, and may be 0.95 or less. The value of x1 representing the atomic ratio of Co is, for example, 0.1 or less (0 ≤ x1 ≤ 0.1), x2 representing the atomic ratio of Mn is, for example, 0.1 or less (0 ≤ x2 ≤ 0.1), y representing the atomic ratio of Al is, for example, 0.1 or less (0 ≤ y ≤ 0.1), and z representing the atomic ratio of the element M is, for example, 0 ≤ z ≤ 0.10.

The element M may be at least one selected from the group consisting of Ti, Zr, Nb, Mo, W, Fe, Zn, B, Si, Mg, Ca, Sr, Sc, and Y In particular, when at least one selected from the group consisting of Nb, Sr, and Ca is contained in the composite oxide HN, the surface structure of the composite oxide HN is stabilized, the resistance is reduced, and the elution of metal is further suppressed. It is more effective when the element M is localized near the particle surfaces of the composite oxide HN.

As the binder for the positive electrode, for example, a resin material is used. Examples of the binder include a fluorocarbon resin, a polyolefin resin, a polyamide resin, a polyimide resin, an acrylic resin, and a vinyl resin. The binder may be used singly or in combination of two or more kinds.

Examples of the conductive material include carbon nanotubes (CNTs), carbon fibers other than CNTs, and conductive particles (e.g., carbon black, graphite).

The dispersion medium used in the positive electrode slurry is not particularly limited, and may be, for example, water, an alcohol, N-methyl-2-pyrrolidone (NMP), a mixed solvent of these, and the like.

As the positive electrode current collector, for example, a metal foil can be used. The positive electrode current collector may be porous. The porous current collector includes, for example, a net, a punched sheet, and an expanded metal. Examples of the material of the positive electrode current collector include stainless steel, aluminum, aluminum alloy, and titanium. The thickness of the positive electrode current collector is, although not limited to, for example, 1 to 50 µm, and may be 5 to 30 µm.

### <Nonaqueous electrolyte>

The nonaqueous electrolyte may be a liquid electrolyte (electrolyte solution), may be a gel electrolyte, and may be a solid electrolyte. The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide. The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) is used.

The liquid electrolyte (electrolyte solution) contains, for example, a nonaqueous solvent and a solute dissolved in the nonaqueous solvent. The solute is an electrolyte salt that ionically dissociates in the nonaqueous electrolyte. The solute may include, for example, a lithium salt. The nonaqueous electrolyte can contain various additives.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

As the lithium salt, for example, a lithium salt of a chlorine-containing acid (LiClO₄, LiAlCl₄, LiB₁₀Cl₁₀, etc.), a lithium salt of a fluorine-containing acid (LiPF₆, LiPF₂O₂, LiBF₄, LiSbF₆, LiAsF₆, LiCF₃SO₃, LiCF₃CO₂, etc.), a lithium salt of a fluorine-containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.), and the like can be used. The lithium salt may be used singly or in combination of two or more kinds.

The concentration of the lithium salt in the nonaqueous electrolyte may be 1 mol/liter or more and 2 mol/liter or less, and may be 1 mol/liter or more and 1.5 mol/liter or less. The lithium salt concentration, however, is not limited to the above.

### <Separator>

The separator is excellent in ion permeability and has moderate mechanical strength and electrically insulating properties. As the separator, a microporous thin film, a woven fabric, a nonwoven fabric, and the like can be used. The separator may have a heat-resistant layer.

The separator having a heat-resistant layer can include a base material and a heat-resistant layer. The heat-resistant layer is an insulating layer formed on at least one principal surface selected from two principal surfaces of the base material. The heat-resistant layer can suppress the base material from shrinking in the event of excessive rise in the temperature of the electrode group. Since the inclusion of a heat-resistant layer in the separator can suppress the shrinkage of the base material, an internal short circuit becomes less likely to occur, and the temperature rise in the outermost layer part (S) can be more effectively suppressed.

As the base material, a separator used in lithium secondary batteries and lithium-ion secondary batteries may be used. The base material may be, for example, a porous film containing a polyolefin resin. Polyolefin resins are desirable in that they are excellent in durability and have a function of closing the pores when the temperature rises to a certain level (i.e., a shutdown function). The base material may be of a single-layer structure, a two-layer structure, or a three- or more-layer structure.

The heat-resistant layer may contain inorganic particles (or inorganic filler) and a polymer (or polymer or resin). The polymer binds the inorganic particles to the base material. The polymer is desirably a heat-resistant resin that has higher heat resistance than the major component of the base material. The heat-resistant layer may contain inorganic particles as a major component (e.g., 80 mass% or more) or may contain a heat-resistant resin as a major component (e.g., 40 mass% or more). The heat-resistant layer may contain a heat-resistant resin, without containing inorganic particles.

The heat-resistant resin may be a polyamide resin, a polyimide resin, a polyamide-imide resin, and the like. In particular, it is preferable to include at least one selected from the group consisting of an aromatic polyamide, an aromatic polyimide, and an aromatic polyamide-imide. These are known as polymers having particularly high heat resistance. In view of heat resistance, preferred are aramids, i.e., meta-aramids (meta-type wholly-aromatic polyamides) and para-aramids (para-type wholly-aromatic polyamides).

As the inorganic particles, in terms of electrical insulation and heat resistance, at least one selected from the group consisting of aluminum oxide, boehmite, talc, titanium oxide, and magnesium oxide is preferred.

The thickness of the heat-resistant layer may be 3% to 50% of the thickness of the separator. When the heat-resistant layer is formed on each of the two principal surfaces of the base material, the total thickness of the heat-resistant layers may be 3% to 50% of the thickness of the separator.

### [Examples]

In the following, the present disclosure will be specifically described with reference to Examples and Comparative Examples. The present invention, however, is not limited to the following Examples.

### «Examples 1 to 3»

### (a) Production of positive electrode

A positive electrode slurry was prepared by mixing 100 parts by mass of a positive electrode active material (LiNi_{0.92}Co_{0.04}Al_{0.04}O₂), 1.0 part by mass of acetylene black serving as a conductive material, polyvinylidene fluoride (PVDF) serving as a binder, and N-methyl-2-pyrrolidone (NMP). The PVDF amount was 0.9 parts by mass per 100 parts by mass of the positive electrode active material. The positive electrode slurry was applied onto both sides of an aluminum foil (thickness 15 µm) serving as a positive electrode current collector, and the applied film was dried, and rolled with a roller, to form positive electrode active material layers. The thickness of each of the two positive electrode active material layers attached to both sides of the positive electrode current collector was 70 µm. The positive electrode was then cut into a belt-like shape.

### (b) Production of negative electrode

A negative electrode slurry was prepared by mixing a negative electrode active material (a 92:8 mixture of spherical artificial graphite having an average particle diameter of 20 µm and a silicon-based material SiOx where X = 1), styrene butadiene rubber (SBR) serving as a binder, and water. The SBR amount was 1.0 part by mass per 100 parts by mass of the negative electrode active material. The negative electrode slurry was applied onto both sides of a copper foil (thickness 8 µm) serving as a negative electrode current collector, and the applied film was dried, and rolled with a roller, to form negative electrode active material layers. The thickness of each of the two negative electrode active material layers attached to both sides of the negative electrode current collector was 70 µm. The negative electrode was then cut into a belt-like shape.

### (c) Preparation of nonaqueous electrolyte

LiPF₆ was dissolved at a concentration of 1.4 mol/L in a mixed solvent containing ethylene carbonate (EC) and dimethyl carbonate (DMC) in a volume ratio of 1:3 and containing 5 mass% vinylene carbonate, to prepare a nonaqueous electrolyte.

### (d) Fabrication of electrode group

An exposed portion of the positive electrode current collector was disposed near the center in the longitudinal direction of the belt-like positive electrode, and a positive electrode lead made of aluminum was attached to the exposed portion. An exposed portion of the negative electrode current collector was disposed at one end of the longitudinal direction of the belt-like negative electrode, and a negative electrode lead made of nickel was attached to the exposed portion. Then, the positive electrode and the negative electrode were wound with a separator (thickness 20 µm) interposed therebetween, to form a cylindrical electrode group. The separator used here was a polyethylene microporous film having an aramid layer.

One layer from the winding-start end of the electrode group was formed into a tubular portion by winding the negative electrode current collector and the separator. The diameter of the hollow inside the tubular portion was 4 mm.

### (e) Excess portion

A predetermined excess portion was formed in the first electrode (negative electrode). The length L1 of the excess portion along the circumferential direction of the electrode group was set to 100% of the circumferential length L of the negative electrode of the outermost layer (one layer of the outermost layer) in Example 1, about 400% (four layers from the outermost layer) in Example 2, and about 800% (eight layers from the outermost layer) in Example 3. The excess portion was wound, without the separator interposed therebetween, around the outer surface of the negative electrode on the inner layer side.

### (f) Fabrication of battery

Next, a cylindrical lithium-ion secondary battery as illustrated in FIG. 1 was fabricated by the following procedure. An upper insulating plate and a lower insulating plate were placed on the upper and lower end faces of the electrode group, respectively, and the electrode group was housed in a battery case (side wall thickness 220 µm) made of steel (SPCE) having a bottomed cylindrical shape with an opening. At this time, the negative electrode lead was welded to the inside of the bottom of the battery case. Then, an annular groove was formed above the upper insulating plate and near the open end of the battery case. After the positive electrode lead was welded to the underside of a sealing plate having a safety valve of an internal pressure activation type, the nonaqueous electrolyte was injected into the battery case under reduced pressure, and then, the sealing plate was placed on the annular groove so as to close the opening of the battery case. The sealing plate has a gasket placed in advance around its peripheral rim, and with the gasket therebetween, the open end of the battery case was crimped onto the sealing plate, to complete a cylindrical 21700 size lithium-ion secondary battery.

The completed lithium-ion secondary battery was subjected to a preliminary charge-discharge consisting of charging to 4.2 V at a constant current equal to 0.3C and, then, discharging to 2.5 V at a constant current equal to 0.5C, to obtain a lithium-ion secondary battery corresponding to the initial state.

### «Example 4»

In one layer from the winding-start end of the electrode group, a tubular portion was formed by winding the positive electrode, the negative electrode, and the separator. Except for this, in the same manner as in Example 1, a lithium-ion secondary battery was obtained.

### <<Comparative Example 1>>

With no excess portion provided in the negative electrode, the negative electrode was disposed at the outermost layer, and the negative electrode active material layer was disposed only on the inner circumferential side of the negative electrode of the outermost layer. Except for this, in the same manner as in Example 1, a lithium-ion secondary battery was obtained.

### <<Comparative Examples 2 and 3>>

A lithium-ion secondary battery was obtained in the same manner as in Examples 1 and 2, except that the separator was disposed on the inner circumferential side of the excess portion.

### [Evaluation]

### (1) Discharge capacity

In a 25 °C environment, a lithium-ion secondary battery in a discharged state was charged at a constant current equal to 0.5C (2-hour rate) until the battery voltage reached 4.2 V, and then charged at a constant voltage of 4.2 V until the current value reached 50 mA. This was followed by discharging at a constant current equal to 0.2C (5-hour rate) until the battery voltage reached 2.5 V, to determine a discharge capacity (DC). Note that the current at an X-hour rate means (1/X)C (A) = rated capacity (Ah) / X (h), where X represents the time taken for charging or discharging electricity equivalent to the rated capacity.

### (2) Safety against fire spread

The batteries were placed in a 500 °C oven, and 10 minutes after heating, the heating was stopped. Table 1 shows the percentage of the occurrence of cracking in the side wall of the battery case, regardless of whether the safety valve was activated or not. With respect to 100 batteries each for Examples and Comparative Examples, the safety against the fire spread was checked, and the ratio (R) of the number of batteries in which cracking had occurred in the side wall of the battery case was determined.

The evaluation results are shown in Table 1. The batteries of Examples 1 to 4 are denoted as batteries A1 to A4, and the batteries of Comparative Examples 1 to 3 are denoted as batteries B1 to B3. In Table 1, the discharge capacity of the battery of each Example is a relative ratio, with the discharge capacity of the battery A1 taken as 100%.

**[Table 1]**

| battery | current collector at outermost layer | L1 (number of layers) | separator interposed | DC | R (%) | hollow |
|---|---|---|---|---|---|---|
| A1 | Cu foil | 1 | absent | 100 | 30 | negative electrode + separator |
| A2 | Cu foil | 4 | absent | 99.5 | 20 | negative electrode + separator |
| A3 | Cu foil | 8 | absent | 99 | 10 | negative electrode + separator |
| A4 | Cu foil | 1 | absent | 100.5 | 60 | negative electrode + positive electrode + separator |
| B1 | Cu foil | 0 | absent | 100.2 | 90 | negative electrode + separator |
| B2 | Cu foil | 1 | present | 99 | 80 | negative electrode + separator |
| B3 | Cu foil | 4 | present | 96 | 50 | negative electrode + separator |

In the column of the "separator interposed" in Table 1, "present" indicates that the separator was interposed between the first electrode on the inner layer side and the excess portion, and "absent" indicates that no separator was interposed therebetween. Especially, in the battery B3, as compared to the other batteries, the discharge capacity (DC) was low due to the presence of the separator interposed.

In the batteries of the Examples, as compared to the battery B1, the ratio (R) of the number of batteries in which cracking had occurred in the side wall of the battery case was significantly low. Even when comparison is made between the batteries having the same length L1 of the excess portion along the circumferential direction of the electrode group, in Examples, the ratio (R) of the number of batteries in which cracking had occurred in the side wall of the battery case was significantly low. In a battery having high safety, even though the electrode group catches a fire, the safety valve will activate normally, to suppress the occurrence of cracking in the side wall of the battery case.

Comparison between the batteries A1 and A4 having the same length L1 of the excess portion along the circumferential direction of the electrode group shows that the ratio (R) in the battery A1 was low. This is presumably because the hollow in the battery A1 served as a passage for the gas generated inside the battery, enhancing the function of allowing the gas to be vented outside through the safety valve.

### [Industrial Applicability]

A nonaqueous electrolyte secondary battery according to the present disclosure is useful as a main power source for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

**[Reference Signs List]**

| | | | |
|---|---|---|---|
| 10 | nonaqueous electrolyte secondary battery | | |
| 11 | sealing assembly | | |
| 12 | valve body | | |
| 13 | metal plate | | |
| 14 | insulating member | | |
| 15 | positive electrode | | |
| 15L | positive electrode lead | | |
| 15a | positive electrode active material layer | | |
| 15b | positive electrode current collector | | |
| 16 | negative electrode | | |
| 16L | negative electrode lead | | |
| 16a | negative electrode active material layer | | |
| 16b | negative electrode current collector | | |
| 16D | excess portion | | |
| 17 | separator | 18 | electrode group |
| 21 | gasket | | |
| 22 | battery case | | |
| 22a | groove | | |

## Claims

1. A nonaqueous electrolyte secondary battery, comprising:
an electrode group including a first electrode having a first current collector, a second electrode having a second current collector, and a separator interposed between the first electrode and the second electrode; a nonaqueous electrolyte; and a battery case housing the electrode group and the nonaqueous electrolyte, wherein
the first electrode and the second electrode are wound with the separator interposed therebetween, in which an outermost layer of the first electrode is disposed further outside than an outermost layer of the second electrode,
a winding-finish end of the first electrode is an end of an excess portion which is wound around an outer surface of the first electrode on an inner layer side, with neither the second electrode nor the separator interposed therebetween, and
the excess portion is an exposed portion of the first current collector.

2. The nonaqueous electrolyte secondary battery according to claim 1, wherein a circumferential length L1 of the excess portion is 50% or more of a circumferential length L of the first electrode of the outermost layer.

3. The nonaqueous electrolyte secondary battery according to claim 1 or 2, wherein a circumferential length L1 of the excess portion is 100% or more of a circumferential length L of the first electrode of the outermost layer.

4. The nonaqueous electrolyte secondary battery according to any one of claims 1 to 3, wherein
the first electrode is a negative electrode, and
the first current collector contains Cu.

5. The nonaqueous electrolyte secondary battery according to claim 4, wherein one or more layers from a winding-start end of the electrode group have a tubular portion constituted of only the negative electrode, or only the negative electrode and the separator.

6. The nonaqueous electrolyte secondary battery according to claim 5, wherein a diameter of a hollow inside the tubular portion is 1 mm or more and 8 mm or less.

7. The nonaqueous electrolyte secondary battery according to any one of claims 1 to 4, wherein
the first electrode is a positive electrode, and
the first current collector contains at least one selected from the group consisting of Al, Ti, and stainless steel.

8. The nonaqueous electrolyte secondary battery according to any one of claims 1 to 7, wherein the first electrode includes, except the excess portion, a first active material layer disposed on a surface of the first current collector.
